# EUROPÄISCHE PATENTANMELDUNG

(11) **EP 0 624 497 A1**
(43) Veröffentlichungstag der Anmeldung: **17.11.1994**
(21) Anmeldenummer: 94201307.9
(22) Anmeldetag: 10.05.1994
(51) Int. Cl.: B60T 8/30, B60T 8/26

(54) **Bremsdruckminderer**

(30) Priorität: 12.05.1993 DE 4315827
(71) Anmelder: ITT Automotive Europe GmbH, D-60488 Frankfurt am Main (DE)
(72) Erfinder: Cezanne, Rudolf, D-61279 Grävenwiesbach (DE)

(57) **Zusammenfassung**

In der vorliegenden Erfindung geht es um einen Bremsdruckminderer, der mit einem Stufenkolben (1) versehen ist, welcher beim Erreichen eines bestimmten Umschaltdruckes ein Regelventil (7) schließt. Da bei einem Großteil aller Bremsungen dieser Umschaltdruck nicht erreicht wird, kann es unter Umständen zu langen Ruhephasen des Stufenkolbens (1) kommen. Dann besteht die Gefahr, daß Dichtungen (18, 19) an den mit ihnen in Verbindung stehenden Metallflächen festhaften. Dies führt zu einer erhöhten Startreibung, wenn der Umschaltdruck bei einer folgenden Bremsung einmal erreicht wird und der Kolben sich in Bewegung setzen muß. Zur Vermeidung dieser Startreibung wird vorgeschlagen, daß die den Umschaltdruck bestimmende Steuerkraft (F) erst nach dem Zurücklegen eines ersten Teils (s₁) des Schließwegs (S) auf den Stufenkolben (1) wirkt. Durch diese Maßnahme setzt sich der Stufenkolben (1) auch schon bei leichten Bremsungen in Bewegung, so daß ein Festhaften der Dichtungen (18, 19) sicher unterbunden ist. Damit der Stufenkolben (1) sich auch nach jeder Bewegung wieder zurück in seine Ruhelage begibt, ist vorgesehen, eine rückstellende Federkraft (f) auf dem ersten Teil(s₁) des Schließweges (S) auf den Stufenkolben (1) wirken zu lassen, wo die Steuerkraft noch nicht angreift.

## Beschreibung

Die vorliegende Erfindung bezieht sich auf einen Bremsdruckminderer gemäß dem Oberbegriff des Hauptanspruchs.

Ein gattungsgemäßer Bremsdruckminderer ist aus der DE-3839566-A-1 bekannt. Solche Bremsdruckminderer finden in hydraulischen Bremsanlagen Verwendung, wo sie zwischen einem Hauptbremszylinder und einem zu einem Hinterrad gehörenden Radbremszylinder in die Bremsleitung eingebaut werden. Beim Bremsdruckaufbau gelangt zunächst ungeminderter Bremsdruck bis zum Radbremszylinder des Hinterrades. Sobald ein gewisser Umschaltdruck erreicht ist, wird jeder weitere vom Hauptzylinder herrührende Druckanstieg gemindert an die Hinterradbremse weitergegeben. Der Umschaltdruck eines jeden Bremskraftreglers ist so gewählt, daß eine möglichst gute Anpassung an die Kurve des idealen Bremsdruckverlaufs in der Hinterachse gegeben ist. Leichte Bremsungen, bei welchen der Umschaltdruck nicht erreicht wird, betätigen den Bremsdruckminderer nicht.

Der verschiebbare Kolben bleibt in seiner Ruhelage. Unter Umständen kann eine längere Zeit verstreichen, bis sich der Stufenkolben erstmalig wieder in Bewegung setzt. Während dieser langen Ruhephasen haften die Dichtungen, welche den Stufenkolben gegen die ihn umgebende Bohrungswand abdichten, immer fester an den mit ihnen in Berührung stehenden Metallflächen an. Wenn schließlich doch einmal der Umschaltdruck erreicht wird, führt dies zu einer erhöhten Startreibung des Stufenkolbens, so daß u.U. der Umschaltdruck des Bremsdruckminderers zu einem höheren Wert hin verschoben ist.

Die Aufgabe der vorliegenden Erfindung besteht darin, die Startreibung des Stufenkolbens zu verringern und damit eine kleinere Streuung der Umschaltdrücke zu erzielen.

Diese Aufgabe wird gelöst durch die kennzeichnende Merkmale im Hauptanspruch. Das Prinzip der vorliegenden Erfindung besteht also darin, die den Schließdruck festlegende Steuerkraft erst dann auf den Stufenkolben wirken zu lassen, wenn dieser einen Teil des Schließweges zurückgelegt hat, so daß auch bei kleinen Bremsdrücken der Stufenkolben jedesmal verschoben wird, bis er von der Steuerkraft beaufschlagt wird. Durch die häufige Kolbenbewegung wird ein Festhaften der Dichtungen wirkungsvoll unterbunden.

Vorteilhaft ist es, für diesen ersten, von der Steuerkraft gelösten Teil des Schließweges eine rückstellende Federkraft auf den Stufenkolben wirken zu lassen, welche sicherstellt, daß der Stufenkolben auch nach jeder Bewegung wieder in seine Ruhelage zurückkehrt. Diese rückstellende Federkraft sollte aber im Vergleich zur Steuerkraft sehr klein bemessen sein, damit auch mit Sicherheit der Stufenkolben bei einem Druckaufbau bewegt wird.

Weitere vorteilhafte Merkmale ergeben sich aus den Unteransprüchen sowie durch die nun folgende Beschreibung von zwei Ausführungsbeispielen anhand zweier Zeichnungen. Es zeigt:
- Fig. 1: einen erfindungsgemäßen lastabhängig steuerbaren Bremsdruckminderer,
- Fig. 2: einen erfindungsgemäßen Bremsdruckminderer als Einschraubpatrone.

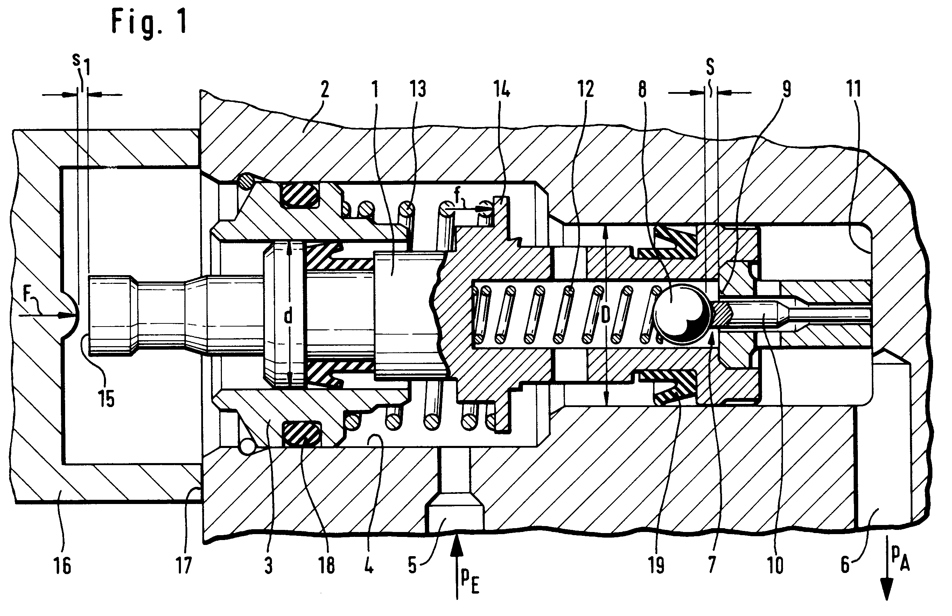

Im Ausführungsbeispiel nach Fig. 1 ist der Stufenkolben 1 zur lastabhängigen Ansteuerung durch die Steuerkraft F mit seinem kleineren Durchmesser d aus dem Gehäuse 2 abgedichtet herausgeführt. Dazu ist in die Gehäusebohrung 4 die gehäusefeste Hülse 3 mit einem Sprengring eingefügt. Ihr Innendurchmesser entspricht dem kleineren Durchmesser d des Stufenkolbens 1. Der größere Durchmesser D des Stufenkolbens 1 ist gegen die Bohrungswand der Gehäusebohrung 4 abgedichtet zwischen dem Druckmitteleinlaß 5 und dem Druckmittelauslaß 6 geführt. Die Druckmittelverbindung zwischen dem Druckmitteleinlaß 5 und Druckmittelauslaß 6 wird über das Regelventil 7 kontrolliert. Vom Ventilstößel 10 wird das Schließglied 8 um den Schließweg S vom Ventilsitz 9 auf Distanz gehalten. Dazu stützt sich der Ventilstößel 10 an der auslaßseitigen Stirnwand 11 der Gehäusebohrung 4 ab. In Schließrichtung wird das Schließglied von der Ventilfeder 12 beaufschlagt. Auf den Stufenkolben 1 wirkt die Kraft der Rückstellfeder 13, welche sich einerseits an der Hülse 3 und andererseits am radialen Vorsprung 14 des Stufenkolbens 1 abstützt. Die Rückstellfeder 13 wirkt in Öffnungsrichtung des Regelventils 7 auf den Stufenkolben 1, also auf die auslaßseitige Stirnwand 11 zu und hält den Stufenkolben 1 mit seinem an die Atmosphäre geführten Ende 15 auf Distanz vom Ansteuerelement 16. Diese Distanz entspricht einem Teil s₁ des Schließweges S. Das Ansteuerelement 16 kann sich dem Stufenkolben Ende 15 nicht weiter annähern, da es beidseitig der Gehäusebohrung 4 einen gehäusefesten Anschlag 17 besitzt. Auf den Stufenkolben 1 wirkt also die Steuerkraft F erst dann, wenn er sich bei Druckaufbau vom Druckmitteleinlaß 5 her um den ersten Teil s₁ des Schließweges S gegen die rückstellende Federkraft f bewegt hat. Da diese rückstellende Federkraft f im Vergleich zur Ansteuerkraft F sehr klein ist, ist gewährleistet, daß der Stufenkolben sich auch schon bei niedrigen Drücken bewegt. Eine Druckminderung erfolgt aber erst dann, wenn er den Schließweg S überwunden hat, wenn also die Steuerkraft F auf ihn wirkt. Die den Stufenkolben 1 an seinem kleineren Durchmesser d umgebende Dichtung 18 sowie die ihn an seinem größeren Durchmesser D umgebende Dichtung 19 können somit nicht mehr an den sie berührenden Metallflächen der Gehäusebohrung 4 bzw. der Hülse 3 festhaften. Zumindest ist immer gewährleistet, daß beim Erreichen des Umschaltdruckes die Haftreibung der Dichtungen 18 und 19 überwunden ist.

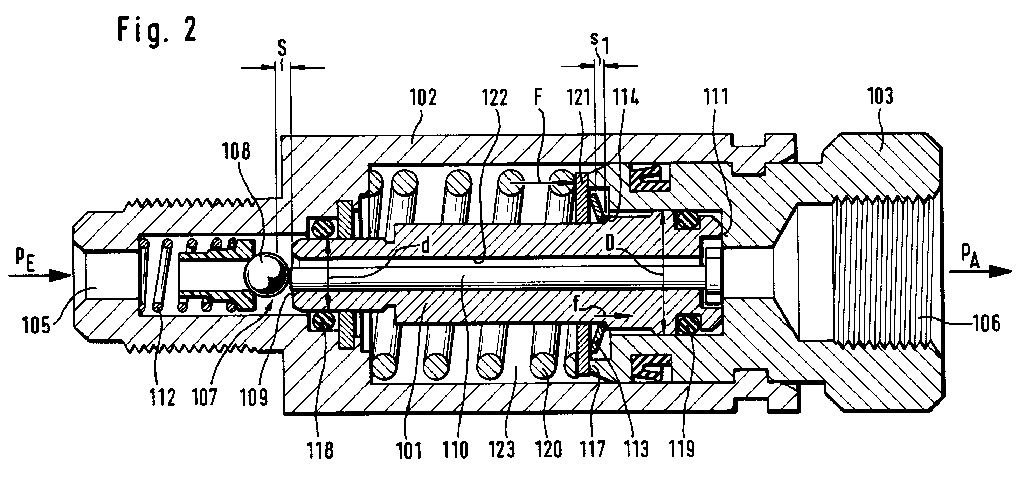

In Fig. 2 sind bei entsprechenden Funktionsteilen die zugehörigen Bezugszeichen um 100 gegenüber der Fig. 1 erhöht. Der Stufenkolben 101 ist mit seinem Ende kleineren Durchmesser d dem Druckmitteleinlaß 105 zugewandt, während sein Ende gößeren Durchmessers D dem Druckmittelauslaß 106 zugeordnet ist. Mit beiden Durchmessern d, D ist der Stufenkolben 1 abgedichtet geführt mit den Dichtungen 118 bzw. 119. Dadurch sind der Druckmitteleinlaß 105 und der Druckmittelauslaß 106 von der dazwischenliegenden druckmittelfreien, unter Atmosphärendruck stehenden Federkammer 123 getrennt. Der Stufenkolben 101 besitzt eine durchgehende Axialbohrung 122, welche bei geöffnetem Regelventil 107 den Druckmitteleinlaß 105 mit dem Druckmittelauslaß 106 verbindet. Durch die Axialbohrung verläuft der Ventilstößel 110, der sich an der auslaßseitigen Stirnwand 111 am Gehäusestopfen 103 abstützt. Dieser Gehäusestopfen 103 ist mit dem Gehäuse 102 druckdicht verstemmt.

Wie zuvor beschrieben, hält der Ventilstößel 110 das Schließglied 108 um den Schließweg S vom Ventilsitz 109 entfernt. Das Schließglied 108 wird auch hier von einer Ventilfeder 112 in Schließrichtung des Regelventils 107 beaufschlagt. In der Federkammer 123 sind zwei Druckfedern unterschiedlicher Federhärte angeordnet. Die Steuerfeder 120 stützt sich einerseits am Gehäuse 102 und andererseits an einer den Stufenkolben 101 umgebenden, gegenüber dem Stufenkolben 101 axial verschiebbaren Ringscheibe 121 ab. Diese besitzt einen gehäusefesten Anschlag 117 am Gehäusestopfen 103. Zwischen der Ringscheibe 121 und dem auslaßseitig von ihr angeordneten radialen Vorsprung 114 am Stufenkolben 101 ist der Stufenkolben 101 von der Rückstellfeder 113 umgeben, welche in diesem Ausführungsbeispiel eine Tellerfeder ist. Da erfindungsgemäß die Federhärte dieser Rückstellfeder 113 wesentlich kleiner ist als die der Steuerfeder 120, wird auf dem ersten Teil des Schließweges s₁, welchen der Stufenkolben 101 zurücklegt, nur die Rückstellfeder 113 komprimiert. Erst dann, wenn die Rückstellfeder 113 flach an der Ringscheibe 121 anliegt, wirkt auf den Stufenkolben 111 die volle Steuerkraft F. Der Schließweg S des Regelventils 107 ist auch hier größer als die Strecke s₁, auf welcher nur die Rückstellfeder 113 an den Stufenkolben 101 angreift. Dadurch ist auch hier gewährleistet, daß der Stufenkolben 101 sich schon bei kleinen Drücken vom Druckmitteleinlaß 105 her in Bewegung setzt und ein Festhaften der Dichtungen 118 und 119 verhindert und daß das Regelventil 107 sich erst durch den von der Steuerfeder 120 festgelegten Umschaltdruck schließen läßt.

### Bezugszeichenliste

- 1: Stufenkolben
- 2: Gehäuse
- 3: Hülse
- 4: Gehäusebohrung
- 5: Druckmitteleinlaß
- 6: Druckmittelauslaß
- 7: Regelventil
- 8: Schließglied
- 9: Ventilsitz
- 10: Ventilstößel
- 11: Stirnwad
- 12: Ventilfeder
- 13: Rückstellfeder
- 14: Vorsprung
- 15: Stufenkolbenende
- 16: Ansteuerelement
- 17: Anschlag
- 18: Dichtung
- 19: Dichtung
- 101: Stufenkolben
- 102: Gehäuse
- 103: Gehäusestopfen
- 105: Druckmitteleinlaß
- 106: Druckmittelauslaß
- 107: Regelventil
- 108: Schließglied
- 109: Ventilsitz
- 110: Ventilstößel
- 111: Stirnwand
- 112: Ventilfeder
- 113: Rückstellfeder
- 114: Vorsprung
- 118: Dichtung
- 119: Dichtung
- 120: Steuerfeder
- 121: Ringscheibe
- 122: Axialbohrung
- 123: Federkammer

## Patentansprüche

1. Bremsdruckminderer für die Hinterradbremsen eines zweiachsigen Fahrzeugs
mit einem Druckmitteleinlaß (5, 105), einem Druckmittelauslaß (6, 106) und einem dazwischen abgedichteten, verschiebbaren Kolben (1, 101), mit einem drucklos offenen Regelventil (7, 107) zwischen Druckmitteleinlaß (5, 105) und
Druckmittelauslaß (6, 106), welches vom Stufenkolben (1, 101) nach Überwindung eines Schließweges (S) schließbar ist
sowie mit einer Steuerkraft (F), welche beim Schließen des Regelventils (7, 107) auf den Stufenkolben (1, 101) in Öffnungsrichtung des Regelventils (7, 107) ausgeübt wird und welche den Schließdruck festlegt, bei welchem der Schließweg (S) vom Stufenkolben (1, 101) überwunden ist,
dadurch **gekennzeichnet**, daß die
Steuerkraft (F) erst wirksam wird, wenn der Stufenkolben (1, 101) einen ersten Teil (s₁) des Schließweges (S) zurückgelegt hat.

2. Bremsdruckminderer nach Anspruch 1, dadurch **gekennzeichnet**, daß auf dem ersten Teil (s₁) des Schließweges (S) auf den Stufenkolben (1, 101) eine rückstellende Federkraft (f) in Öffnungsrichtung des Regelventils (7, 107) wirkt, welche kleiner ist als die Steuerkraft (F).

3. Bremsdruckminderer nach Anspruch 1 oder 2, dadurch **gekennzeichnet**, daß die Steuerkraft (F) von einer gefesselten Druckfeder (Steuerfeder 120) ausgeübt wird.

4. Bremsdruckminderer nach Anspruch 1 oder 2, dadurch **gekennzeichnet**, daß die Steuerkraft (F) von einer hebelmechanischen, pneumatischen oder hydraulischen Anordnung (Ansteuerelement 16) ausgeübt wird, welche einen eine Bewegung zum Stufenkolben (1) hin begrenzenden Anschlag (17) hat.

5. Bremsdruckminderer nach einem der Ansprüche 2, 3 oder 4, dadurch **gekennzeichnet**, daß die rückstellende Federkraft (f) von einer Tellerfeder (113) ausgeübt wird.

6. Bremsdruckminderer nach einem der Ansprüche 2, 3 oder 4, dadurch **gekennzeichnet**, daß die rückstellende Federkraft (f) von einer Schraubenfeder (13) ausgeübt wird.
